# EUROPEAN PATENT APPLICATION

(11) **EP 1 661 809 A2**
(43) Date of publication of application: **31.05.2006**
(21) Application number: 06003375.0
(22) Date of filing: 21.10.2003
(51) Int. Cl.: B65B 9/22, B65B 59/02, B29C 53/50

(54) **Equipment to package rectangular bags with rigid corners**

(30) Priority: 04.11.2002 IT BO20020694
(62) Divisional of application: 03751178.9
(71) Applicant: ICA SPA, 40138 Bologna (IT)
(72) Inventor: Rapparini, Gino, 40068 Bologna (IT)
(74) Representative: Beszédes, Stephan G.

(57) **Abstract**

An equipment to package rectangular bags with rigid corners, including a forming rectangular tube R provided with four small fins (1, 2, 3, 4) that are parallel and prominent laterally along the prolongation of the two parallel sides of the forming tube R. Said fins, together with two longitudinal side contrasts (L) located parallel to the two other sides of the forming tube (R), create on the film F four prominent longitudinal folds (11, 12, 13, 14), which remain even when the four short fins (1, 2, 3, 4) end to allow the intervention of four thermosealing devices (21, 22, 23, 24). Said thermosealing devices (21, 22, 23, 24), in cooperation with the side contrasts L, perform the thermosealing operations of the prominent longitudinal folds of the film F, which is wrapped around the rectangular tube R, thus realizing the stiffening of the four corners S of the bag resulting from the packaging process of the film F. The equipment is constructed for an automatic positioning of four thermosealing devices at each change of format.

## Description

### Field of the art

The present invention refers to the technology of packaging machines and to the packages resulting from said machines. As reference classes there are the following International Classifications: B65b, B65d.

### State of the art

Some kind of equipment to package rectangular bags with rigid corners are already known: all the known equipment have cumbersome and expensive complexities especially when the change of format is required. In fact, when the need to change the proportioning and the dimensioning of the bag to be packaged arises, complex structural problems come along, which require difficult and expensive interventions. Said interventions also might turn out unreliable especially to regulate the operating devices which are cinematically very articulated.

Document DE 199 57 891 A discloses an equipment to package rectangular bags with rigid corners, comprising a rectangular forming tube provided with four small fins that are parallel and prominent laterally along the prolongation of the two parallel sides of the forming tube, said fins, together with two longitudinal side contrasts, being located parallel to the two other sides of the forming tube, for creating on a film four prominent longitudinal folds, which remain even when the four short fins end, in order to allow the intervention of four thermosealing devices (see column 3, lines 50 to 56), said thermosealing devices, in cooperation with the side contrasts, being constructed for performing thermosealing operations of the prominent longitudinal folds of the film, which is wrapped around the rectangular forming tube, thus realizing the stiffening of the four corners of the bag resulting from the packaging process of the film.

The main problem unterlying to the invention is to be able to manufacture several sizes of bags on a single machine.

The solution proposed by the present invention solves all the problems above in a surprisingly easy, reliable and affordable way.

### Description

The subject-matter of the invention is an equipment to package rectangular bags with rigid corners, comprising a rectangular forming tube provided with four small fins that are parallel and prominent laterally along the prolongation of two parallel sides of the forming tube, said fins, together with two longitudinal side contrasts, being located parallel to two other sides of the forming tube for creating on the film four prominent longitudinal folds, which remain even when the four short fins end, in order to allow the intervention of four thermosealing devices, said thermosealing devices, in cooperation with the side contrasts, being constructed for performing thermosealing operations of the prominent longitudinal folds of the film which is wrapped around the rectangular forming tube, thus realizing the stiffening of the four corners of the bag resulting from the packaging process of the film, characterized in that the equipment is constructed for an automatic positioning of four thermosealing devices at each change of format, wherein a sensible motor, upon perception of the presence of the side contrasts of the forming tube, is adapted for recording the working position of the simultaneous operations of quadruplet programmed thermosealing, and a length of toothed side zones is such to allow transversal excursions of approach and departure, performed by a pneumatic actuator of both frames to regulate the sideways position of the thermosealing devices according to the size of the side contrasts corresponding to different dimensions of rectangular forming tubes.

The subject-matter of the invention is distinguished from Document DE 199 57 891 A in that the equipment is constructed for an automatic positioning of four thermosealing devices at each change of format, wherein a sensible motor, upon perception of the presence of the side contrasts of the forming tube, is adapted for recording the working position of the simultaneous operations of quadruplet programmed thermosealing, and the length of toothed zones is such to allow transversal excursions of approach and departure, performed by a pneumatic actuator of both frames to regulate the sideways position of the thermosealing devices according to the size of the side contrasts corresponding to different dimensions of rectangular forming tubes.

The invention is now disclosed with reference to the figures of the drawings attached as a not limiting example.

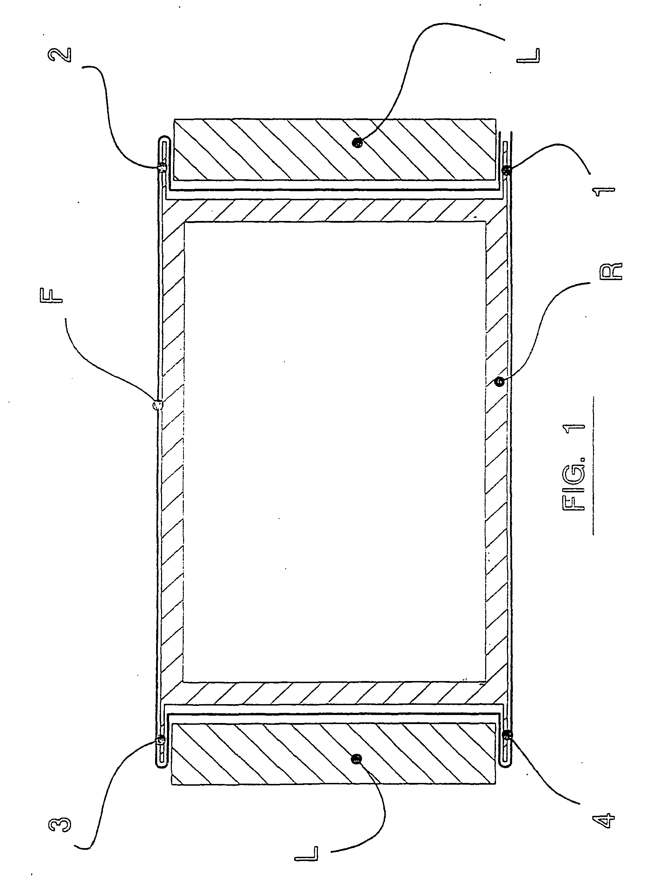

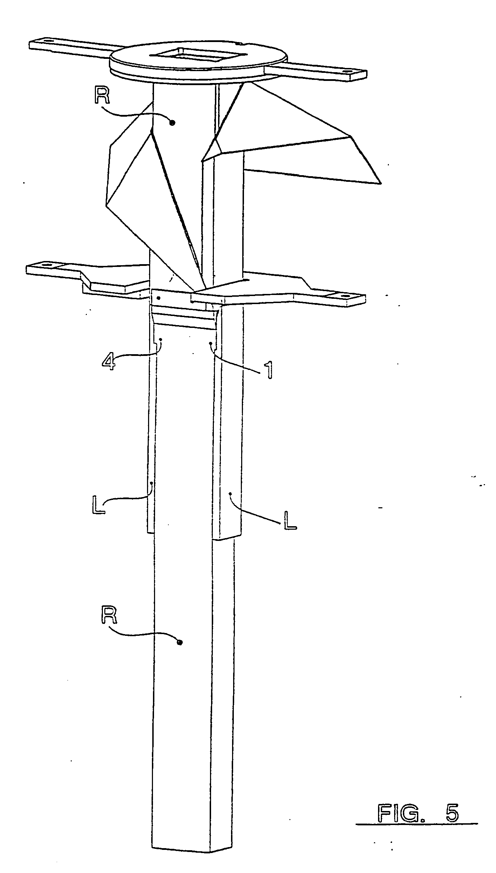

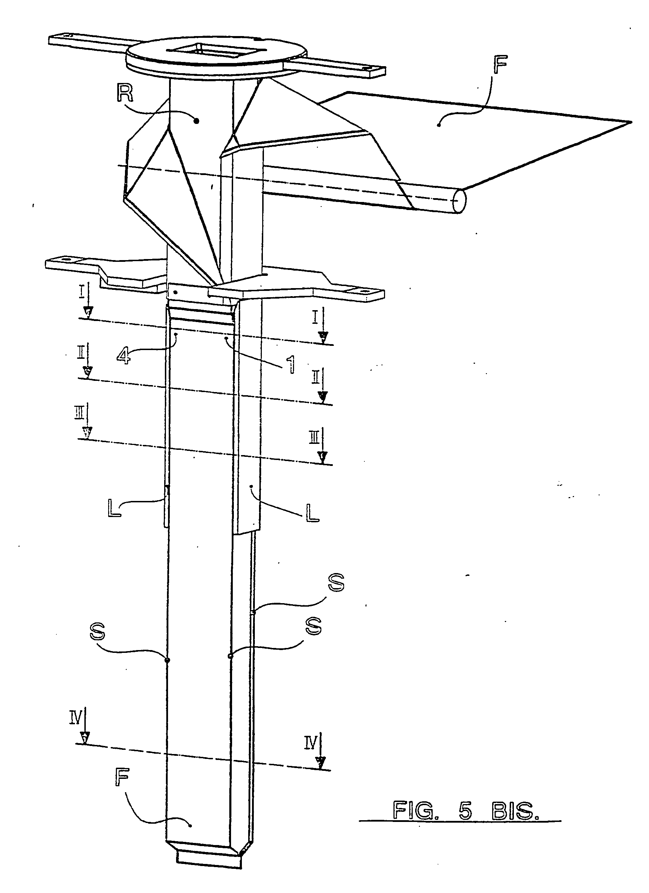

Figure 1 shows, in a section view referred to the position I - I of the figure 5 bis, the position that the film (F) takes by the four short fins (1, 2, 3, 4) of the rectangular forming tube (R), in cooperation with the side contrasts (L). It can be noticed the presence of the four fins inside the folds of film (F).

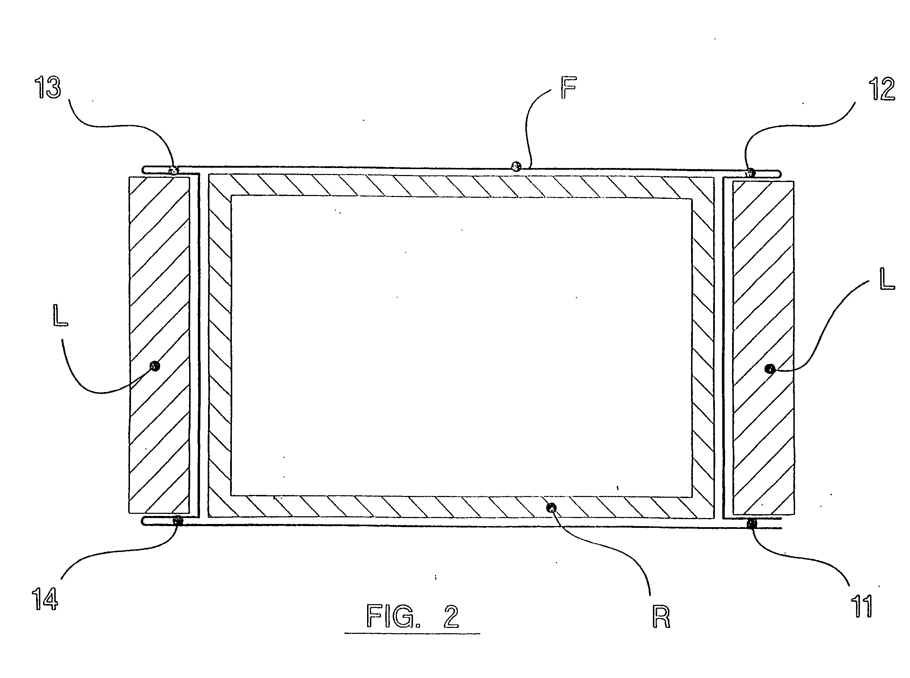

Figure 2 shows, in a section view referred to the position II - II of figure 5 bis, the position that the four folds (11, 12, 13, 14) keep even when the short fins (1, 2, 3, 4) end. It should be pointed out that the folds (11, 12, 13, 14) of the film (F) remain in their folded stance even when the fins that had previously formed them, together with the side contrasts (L), are absent.

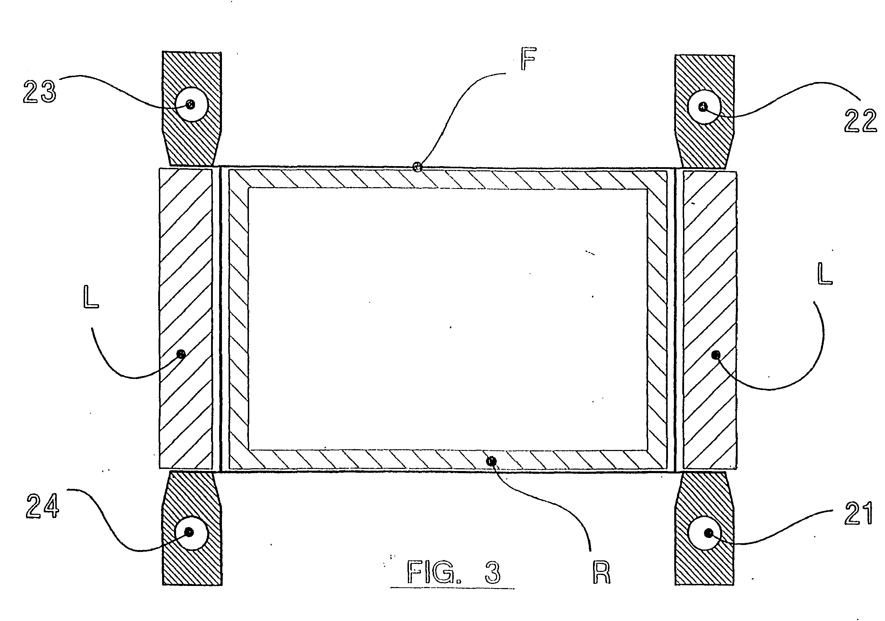

Figure 3 shows, in a section view referred to the position III - III still of figure (5 bis), the intervention of four thermosealing devices (21, 22, 23, 24) which thermoseal the folds (11, 12, 13, 14) of the film (F) against the side contrasts (L). It is clear that the fins (1, 2, 3, 4) are not inserted anymore in the folds (11, 12, 13, 14).

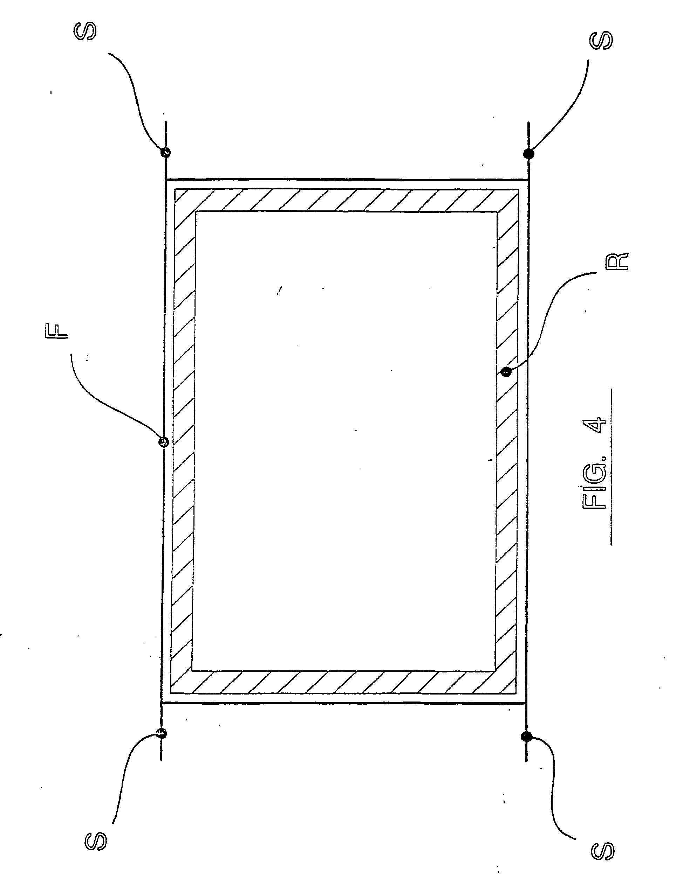

Figure 4 shows, in a section referred to the position IV- IV of the same 5 bis figure, the rigid stance that the corners (S) of the film (F) take by the four corners of the rectangular forming tube (R).

Figure 5 is a prospective representation of the rectangular forming tube (R) provided with side contrasts (L). It can be noticed the presence of two fins (1, 4) prominent laterally from the forming tube (R).

Figure 5 bis is a prospective representation of the evolution of film (F) which is transformed by tube (R), by fins (1, 2, 3, 4) and by the side contrasts (L) in a rectangular package with rigid corners (S).

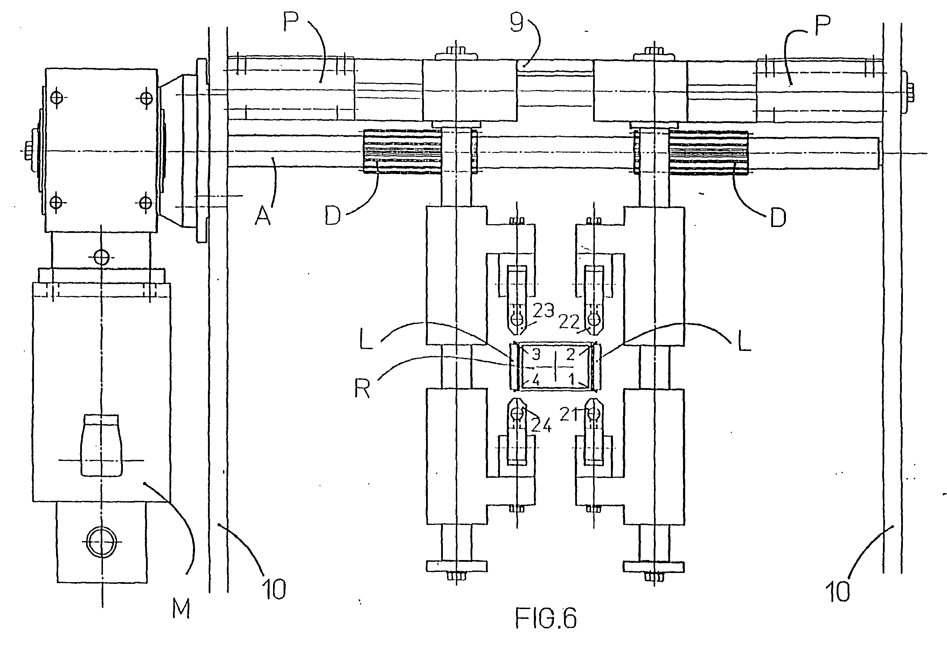

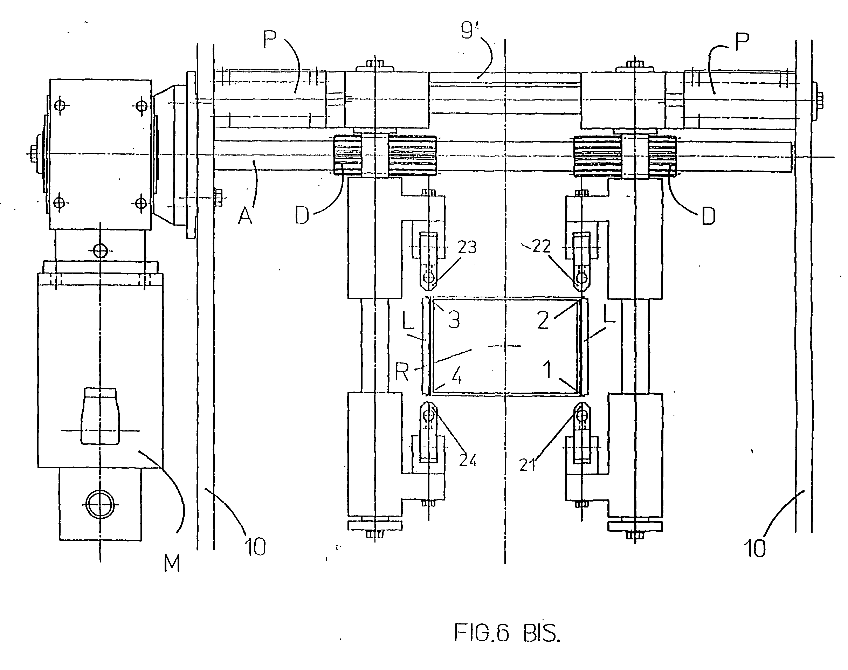

Figure 6 is a schematic horizontal view of the quadruplet equipment set up for a rectangular format of limited dimensions: it should be made clear that the pneumatic actuator (P) performs the positioning of the quadruplet equipment against its stop (9), which defines the side dimensions of the reduced format. It can be noticed the positioning of the four thermosealing devices (21, 22, 23, 24) by the four fins (1, 2, 3, 4) and the side contrasts (L) along the flanks of the rectangular forming tube (R). In said figure (6) it can be noticed the presence of the shaft (A) with two toothed zones (D).

Figure 6 bis is a horizontal schematic view of the same quadruplet equipment set up in a similar fashion for a rectangular format of larger dimensions defined by the stop (9'). It can be noticed that the same quadruplet equipment (21, 22, 23, 24) finds its working position with reference to the new enlarged contrasts.

Figure 7 is a vertical view which shows the positioning against the stop (9) of the frame (8) sliding along the guides (7) fixed upon the bearing structure (10). Four racks (31, 32, 33, 34) can be noticed engaging with the four toothed zones (D) of the shaft (A).

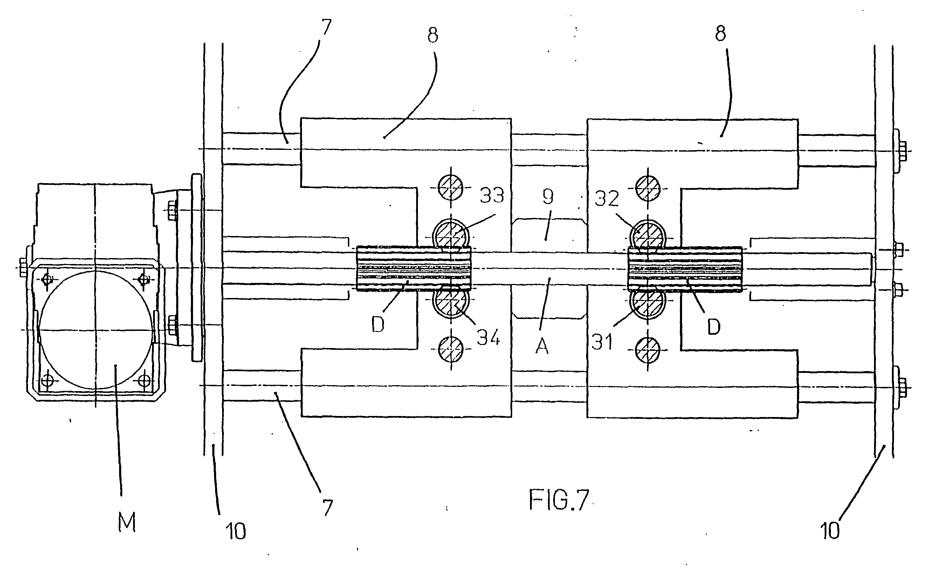

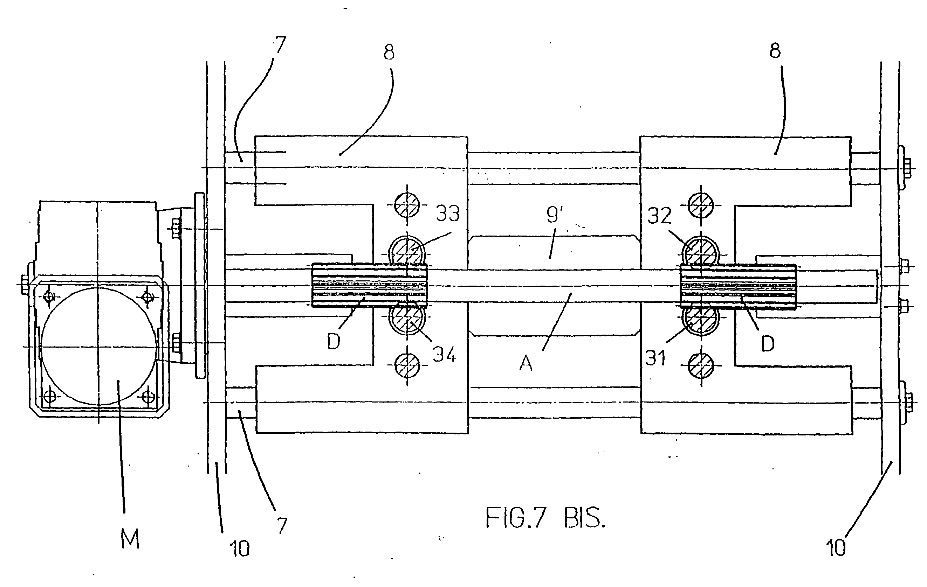

Figure 7bis is a similar view of the figure (7) and shows the positioning of the same sliding frames (8) against the stop (9') of the enlarged format.

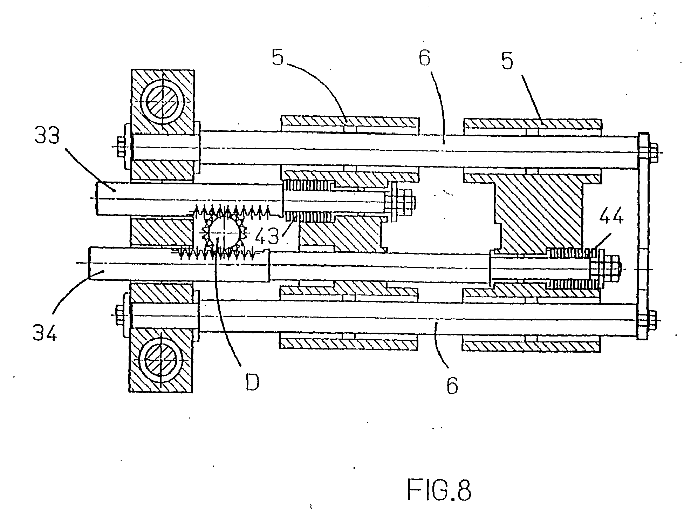

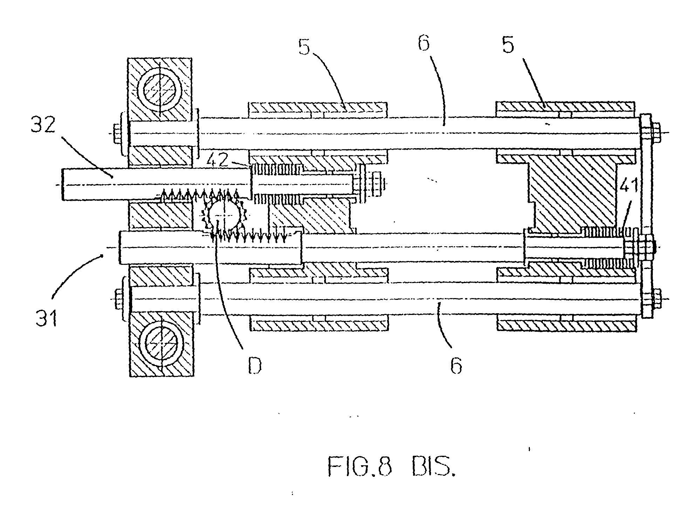

Figure 8 and figure 8bis highlight the function of the four springs (41, 42, 43, 44) inserted on the four racks that make slide simultaneously the frames (5) on the fixed guides (6) of the bearing structure (10). It can be noticed that the presence of the springs is crucial to calibrate the push of the thermosealing devices (21, 22, 23, 24) against the side contrast (L).

### In the figures each single detail is marked as follows:

A is the single transmission shaft.

D indicates two long toothed zones on the side of the shaft (A).

F is the thermosealable film.

L indicates the side contrasts located on the sides of the rectangular forming tube (R).

M indicates the sensitive motor that performs angular oscillations of said single shaft (A).

P indicates a pneumatic actuator which performs the sideways movements of coming and departure of said sliding frames (8) along the fixed guides (7). The working position is defined by the stops (9, 9') corresponding to the format to be packaged.

R indicates the rectangular forming tube.

S indicates the four corners of the packaged bag.

1, 2, 3, 4 indicate four short parallel fins prominent sideways along the prolongation of two parallel sides of the rectangular forming tube.

11, 12, 13, 14 indicate four longitudinal folds prominent from the film (F), which form around the fins 1, 2, 3 and 4 corresponding to the four side contrasts (L). It should be pointed out that the four fold (11, 12, 13, 14) remain even when the four fins (1, 2, 3, 4) end.

21, 22, 23 and 24 indicate four longitudinal thermosealing devices which, in cooperation with the edges of two side contrasts L, perform the thermosealing operation of said four prominent folds at four corners of the forming rectangular tube (R).

31, 32, 33, 34 indicate four racks engaging with two long toothed zones (D) of the shaft (A). It is clear that the angular oscillations are transformed in opposed and simultaneous alternate rectilinear translations of the four thermosealing devices (21, 22, 23, 24) provided at the edges of said racks (31, 32, 33, 34).

41, 42, 43, 44 indicate the springs inserted on the racks (31, 32, 33, 34) to allow all four thermosealing devices (21, 22, 23, 24) to enter in touch with the respective side contrasts (L) to grant the calibration of the thermosealing action.

5 indicates the frames sliding along the relative fixed guiding rods 6 attached to the supporting structure (10).

6 indicates the guiding rods of the sliding frames (5) .

7 indicates the guiding rods of the sliding frames (8) .

8 indicates the frames sliding on the guides (7) fixed on the supporting structure (10).

9 and 9' indicate the stops to determinate the position of the formats.

10 indicate the supporting structure of the entire equipment.

The evidence of the figures highlights the simplicity and reliability of the equipment object of the present invention.

The practical realization of the present invention could of course be performed according to with different dimensioning, structural proportioning and technological choices, as long as the fundamental operational principle of realizing a quadruplet thermosealing equipment that intervenes simultaneously upon to the four corner to make stiff.

All kinds of equipment to package rectangular bags with rigid corners which will present the same characteristics as the one fundamentally described, shown and hereinafter claimed will be considered as being part of the protection sphere of the present invention.

## Claims

1. An equipment to package rectangular bags with rigid corners, comprising a rectangular forming tube (R) provided with four small fins (1, 2, 3, 4) that are parallel and prominent laterally along the prolongation of two parallel sides of the forming tube (R), said fins, together with two longitudinal side contrasts (L), being located parallel to two other sides of the forming tube (R) for creating on the film (F) four prominent longitudinal folds (11, 12, 13, 14), which remain even when the four short fins (1, 2, 3, 4) end, in order to allow the intervention of four thermosealing devices( 21, 22, 23, 24), said thermosealing devices (21, 22, 23, 24), in cooperation with the side contrasts (L), being constructed for performing thermosealing operations of the prominent longitudinal folds of the film (F), which is wrapped around the rectangular forming tube (R), thus realizing the stiffening of the four corners (S) of the bag resulting from the packaging process of the film (F), **characterized in that** the equipment is constructed for an automatic positioning of four thermosealing devices (21, 22, 23, 24) at each change of format, wherein a sensible motor (M), upon perception of the presence of the side contrasts (L) of the forming tube (R), is adapted for recording the working position of the simultaneous operations of quadruplet programmed thermosealing, and a length of toothed side zones (D) is such to allow transversal excursions of approach and departure, performed by a pneumatic actuator (P) of both frames (8) to regulate the sideways position of the thermosealing devices (21, 22, 23, 24) according to the size of the side contrasts (9, 9') corresponding to different dimensions of rectangular forming tubes (R) .
